# EUROPÄISCHE PATENTANMELDUNG

(11) **EP 1 437 188 A1**
(43) Veröffentlichungstag der Anmeldung: **14.07.2004**
(21) Anmeldenummer: 03027122.5
(22) Anmeldetag: 26.11.2003
(51) Int. Cl.: B23B 47/28

(54) **Klemmvorrichtung**

(30) Priorität: 08.01.2003 DE 10300202
(71) Anmelder: Airbus Deutschland GmbH, 21129 Hamburg (DE)
(72) Erfinder: Otten, Jürgen, 27419 Tiste (DE)
(74) Vertreter: Hansmann, Dierk, Dipl.-Ing.

(57) **Zusammenfassung**

Bei einer Vorrichtung zum Klemmen von mindestens zwei Bauteilen, wobei ein Klemmbügel vorgesehen ist, der zwei Klemmteile (9,10) an den Bauteilen im Bereich einer Bearbeitungsstelle positioniert, besteht die Erfindung darin, dass ein Klemmteil (9) ein Führungselement (11,20) für ein Bohrwerkzeug aufweist und in dieses Führungselement ein entfernbarer Positionierstift (12) zum Positionieren an einer Bearbeitungsstelle angeordnet ist sowie das weitere Klemmteil Spannmittel zum Verstellen einer Druckbuchse von einer geöffneten Positionierposition in eine Feststellposition aufweist.

Dabei ist insbesondere von Vorteil, dass wirkungsvoll und auf einfache Art ein Klemmen und Positionieren von zwei Bauteilen zueinander ermöglich wird. Ein exaktes Positionieren auf einem Vorbohrloch oder einer gekennzeichneten Bearbeitungsstelle ist mit einem einfachen Hilfsmittel sichergestellt. Es ist die Verwendung von verschiedenen Bohrmaschinen in Kombination mit der Klemmvorrichtung möglich.

## Beschreibung

Die Erfindung betrifft eine Vorrichtung zum Klemmen von mindestens zwei Bauteilen, wobei ein Klemmbügel vorgesehen ist, der zwei Klemmteile an den Bauteilen im Bereich einer Bearbeitungsstelle positioniert.

Bei der Fertigung von Flugzeugbauteilen werden zum Verbinden von Bauteilen, beispielsweise eines Querträgers mit einem Spant eines Flugzeugrumpfteiles eine Vielzahl von Nietverbindungen benötigt, für die entsprechende Bohrungen vorzusehen sind. Üblicherweise weist ein zu fügendes Bauteil Vorbohrungen auf, die mittels Abbohren auf das weitere Bauteil übertragen werden. Es ist bei handgeführten Werkzeugen in einem Montageprozess in großvolumigen Bauteilen wie beispielsweise in einem Flugzeugrumpf problematisch, an unterschiedlichen Bearbeitungsstellen in Position gehalten zu werden, wenn diese Bearbeitungsstellen schwer zugänglich und/oder die Werkzeuge oder Maschinen schwergewichtig sind und frei geführt werden sollen. So sind beispielsweise bei der Strukturmontage eines Flugzeugrumpfes das Klemmen, Bohren und Vernieten in unterschiedlichen Arbeitspositionen durchzuführen und die Handhabung der Maschinen ist für einen Montagearbeiter kraftaufwendig sowie liegt ergonomisch oft an der Grenze der Belastbarkeit. Auch ist der bei einem frei geführten und kraftaufwendigen Montageprozess übliche Ablauf - nach dem Vorbohren ein Auseinanderfahren der Bauteile, ein Entgraten der Bohrlöcher, das Hinzufügen von Kitt, das Zusammenfahren der Bauteile, das Heften und Fertigbohren der Bauteile - zeitaufwendig und bietet Potential zur Optimierung.
Aus DE 196 39 122 ist eine Vorrichtung zum Klemmen und Bohren bekannt, die an einem Grundkörper ein Klemmteil und ein Bohrteil aufweist. Das Klemmteil weist einen Klemmbügel auf, der mit einem Klemmelement axial und entgegen der Vorschubrichtung aus einer offenen Startposition in eine Klemmposition bewegbar ist. Das Bohrteil weist eine Bohrmaschine auf und ist über einen Klemmzylinder mit dem Klemmteil in Wirkverbindung. Wenn nach dem Positionieren der Bohrerspitze in einer Vorbohrung ein Startknopf gedrückt wird, werden die Bauteile geklemmt und automatisch wird der Bohrvorgang in Bewegung gesetzt. In einigen Fällen ist für die Vorrichtung mit der Kombination der Funktionen Klemmen und Bohren der notwendige Arbeitsraum nicht vorhanden und das Positionieren eines derartigen kompakten Gerätes ist nicht möglich bzw. in der Handhabung schwer durchführbar.

Der vorliegenden Erfindung liegt somit die Aufgabe zugrunde, eine gattungsgemäße Vorrichtung zu schaffen, die insbesondere an beengten, schwer zugänglichen Bearbeitungsstellen eine Klemmung von mindestens zwei miteinander zu verbindenden Bauteilen ermöglicht und für einen Montagearbeiter die Handhabung der Werkzeuge und Maschinen bei unterschiedlichsten Arbeitspositionen erleichtert.

Diese Aufgabe wird erfindungsgemäß durch die im Patentanspruch 1 genannten Maßnahmen gelöst.

Dabei ist nach Anspruch 1 insbesondere vorteilhaft, dass eine Arbeitsvorrichtung geschaffen wurde, die wirkungsvoll und auf einfache Art ein Klemmen und Positionieren von zwei Bauteilen zueinander ermöglicht. Ein exaktes Positionieren auf einem Vorbohrloch oder einer gekennzeichneten Bearbeitungsstelle ist mit einem einfachen Hilfsmittel sichergestellt. Durch Trennung des Klemm- und Bohrprozesses ist das Verwenden und Anbringen der erfindungsgemäßen Einheit in einem beengten Umfeld, beispielsweise bei einer Montage innerhalb einer Flugzeugrumpfstruktur, erleichtert. Es ist die Verwendung von verschiedenen Bohrmaschinen in Kombination mit der Klemmvorrichtung möglich.
Das Nutzungspotential ist insbesondere für einen Montageprozess innerhalb eines großvolumigen Bauteils, beispielsweise eines Flugzeugrumpfes hoch. Durch die Vielzahl der herzustellenden Bohrungen ist der Montageaufwand mit Einsatz der Vorrichtung erheblich zu senken.

Weiterbildungen und vorteilhafte Ausgestaltungen sind in den Ansprüchen 2 bis 9 angegeben.
Mit den Maßnahmen der Ansprüche 2 oder 3 sind Alternativen für Führungselemente des Bohrwerkzeuges beschrieben, die einerseits für die Positionierbewegung den Positionierstift aufnehmen und andererseits beim Bohrvorgang das Bohrwerkzeug führen.
Mit der Maßnahme nach Anspruch 4 ist eine definierte Bearbeitungsrichtung des Bohrwerkzeuges erreichbar.
Die Unteransprüche 5 bis 8 zeigen Maßnahmen zur Ausbildung einer Spanneinrichtung auf.
Im Unteranspruch 9 wird eine Maßnahme erwähnt, die eine Verschmutzung der Bauteile sowie der Fügestelle verringert und somit den nachfolgenden Fertigungsaufwand mindert.

Weitere Einzelheiten und Vorteile ergeben sich aus der nachfolgenden Beschreibung von Ausführungsbeispielen der Erfindung.

In der Zeichnung sind Ausführungsbeispiele der Erfindung dargestellt, welche nachstehend anhand der Figuren 1 bis 6 näher beschrieben sind. In den Figuren sind gleiche Bauteile mit gleichen Bezugszeichen versehen.
Es zeigen im einzelnen:
- Fig. 1: eine schematische Darstellung einer erfindungsgemäßen Klemmvorrichtung in einer ersten Ausführungsform,
- Fig. 2: die Vorrichtung gemäß Fig. 1 in einer Anwendung mit einer Handbohrmaschine,
- Fig. 3: die Vorrichtung gemäß Fig. 1 in einer Anwendung mit einer Bohrvorschubeinheit,
- Fig. 4: eine zweite Ausführungsform der Klemmvorrichtung,
- Fig. 5: eine dritte Ausführungsform der Klemmvorrichtung und
- Fig. 6: eine vierte Ausführungsform der Klemmvorrichtung.

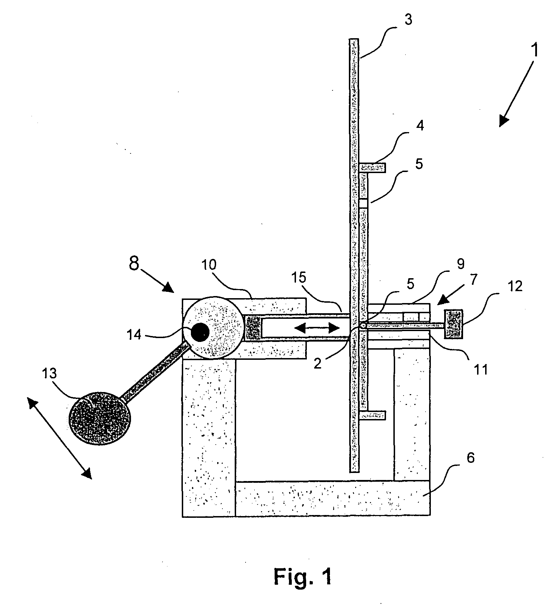

In der Figur 1 ist in schematischer Darstellung eine Klemmvorrichtung 1 für handgeführte Werkzeuge oder ähnliche Maschinen gezeigt. Es ist vorgesehen, zwei Bauteile 3 und 4 miteinander zu verspannen, um mit einem Bohrwerkzeug an einer Bearbeitungsstelle 2 eine Bohrung durchführen zu können. Das Bauteil 3 ist in der gezeigten Ausführung als Spant einer Flugzeugrumpfschale und das Bauteil 4 als Querträger ausgebildet. Der Querträger 4 weist Vorbohrlöcher 5 auf. Zum Herstellen einer qualitätsgerechten Bohrung, beispielsweise eine Bohrung mit Passbohrqualität, sind die Bauteile 3 und 4 mittels der Klemmvorrichtung 1 gespannt und verhindern so, dass zwischen den Bauteilen 3 und 4 Grat entstehen kann und Späne zwischen die Bauteile 3 und 4 eindringen können. Beim Bohren wird die Bohrerspitze eines Bohrwerkzeuges (nicht gezeigt) in das Vorbohrloch 5 positioniert und die Bohrung ausgeführt.
Die Klemmvorrichtung 1 weist einen Klemmbügel 6 auf, wobei Bügelenden 7 und 8 einen offenen Bereich bilden, der ein einfaches Positionieren der Klemmmittel 9 und 10 an der Bearbeitungsstelle 2 am jeweiligen Bauteil 3 und 4 ermöglicht. Das Klemmmittel 9 auf Seiten des Querträgers 4 weist eine Bohrbuchse 11 auf, die für das spätere Bohren die Führung des Bohrwerkzeuges übernimmt. Die Bohrbuchse 11 wird mittels eines Positionierstiftes 12 an der Bearbeitungsstelle 2 positioniert. Der Positionierstift 12 wird dafür in die Bohrbuchse 11 eingeführt und ragt mit seiner Spitze in das Vorbohrloch 5. Eine exakte Positionierung und Klemmung an der Bearbeitungsstelle 2 ist somit gewährleistet. Der Positionierstift 12 wird nach dem Festklemmen der Bauteile herausgezogen. Er kann entweder als separates Teil völlig von der Klemmvorrichtung 1 entfernt werden oder ist unverlierbar mittels einer Kette oder ähnlichem mit dem Klemmbügel 6 verbunden.
Das Klemmmittel 10 auf Seiten des Spantes 3 ist als eine Spanneinrichtung ausgebildet und weist in der gezeigten ersten Ausführungsform einen Spannhebel 13 mit einer exzentrischen Lagerung 14 auf, der zum Spannen eine Druckbuchse 15 zur Bearbeitungsstelle 2 verfährt bzw. zum Öffnen der Klemmung die Druckbuchse 15 zurückzieht oder alternativ die Druckbuchse 15 mittels Federwirkung (nicht gezeigt) zurückfedern kann. Zum Klemmen wird über den Klemmbügel 6 die Klemmkraft auch auf das Klemmteil 9 geleitet und die Bohrbuchse 11 wird ebenfalls an das Bauteil 4 gedrückt.

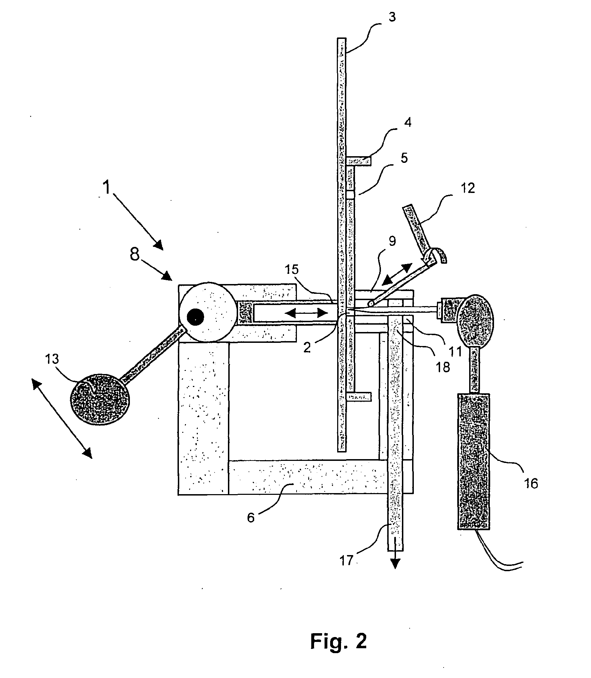

In Fig. 2 ist die Klemmvorrichtung 1 in einer Anwendung mit einer Winkelbohrmaschine 16 gezeigt. Im wesentlichen entspricht die Klemmvorrichtung 1 der in Fig. 1 beschriebenen Ausführungsform. Zusätzlich ist jedoch am Klemmmittel 9 eine Absaugung für Späne vorgesehen, die während des Bohrvorganges entstehende Späne gründlich abtransportiert und somit ein sauberes Bohrloch für den späteren Nietvorgang zur Verfügung stellt. Insbesondere bei Bauteilen aus Composit oder Titan ist aus Arbeitsschutzgründen ein wirksames Absaugen von Spänen an der Bearbeitungsstelle notwendig. Die Absaugung erfolgt vorzugsweise über ein Schlauch- bzw. Rohrsystem 17, wobei entweder die Bohrbuchse 11 mit einer Absaugöffnung 18 versehen ist oder entsprechende Maßnahmen am Ende der Bohrbuchse 11 vorgesehen sind. Auch der Positionierstift 12 ist in dieser Ausführungsform mit dem Klemmmittel 9 verbunden. Der Stift 12 ist mit einem Außengewinde versehen und kann durch Drehen innerhalb des Klemmmittels 9 in der gezeigten Pfeilrichtung verstellt werden. Für das Positionieren wird der Positionierstift 12 zum Bohrbuchsenaustrittsende verstellt und das Positionieren und Klemmen der Klemmeinrichtung 1 kann mittels des Spannhebels 13 erfolgen. Die Druckbuchse 15 wird in Richtung Bearbeitungsstelle 2 verschoben. Wenn die Bauteile 3 und 4 an der Bearbeitungsstelle 2 geklemmt sind, kann der Positionierstift 12 herausgedreht werden. Damit wird die Bohrbuchse 11 freigegeben und mit der Winkelbohrmaschine 16 kann die Bohrung ausgeführt werden. Nach Beendigung des Bohrvorganges wird die Bohrmaschine herausgezogen, durch Betätigung des Spannhebels 13 kann danach der Klemmbügel 6 geöffnet werden und die Klemmeinrichtung 1 kann an einer nächsten Bearbeitungsstelle positioniert werden.

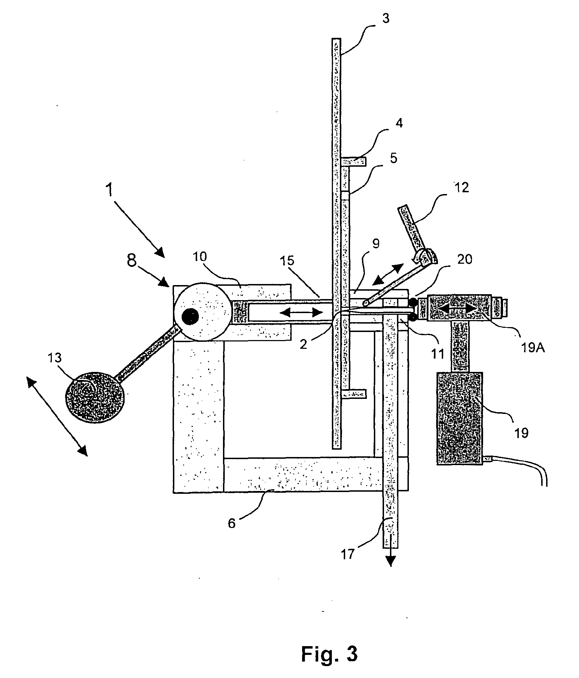

In Fig. 3 ist die erfindungsgemäße Klemmvorrichtung 1 in Kombination mit einem anderen Werkzeug 19, einer Bohrvorschubeinheit, gezeigt. Die Bohrvorschubeinheit 19 wird pneumatisch angetrieben und ermöglicht den automatischen Ablauf des Bohrvorschubes und des Bohrens. Um eine definierte Arbeitsposition der Maschine 19 und eine definierte Bearbeitungsrichtung des Bohrwerkzeugs sicherzustellen, ist statt oder in Kombination mit der Bohrbuchse 11 als Führungselement ein Adapter 20 vorgesehen, der das Ankoppeln des Werkzeugkopfes 19A in Bearbeitungsposition ermöglicht und somit das Bohrwerkzeug in eine definierte Bearbeitungsrichtung verfährt.
Das Adaptieren ist mittels bekannter Spannverfahren, beispielsweise mittels Klemmverfahren, mittels eines Verriegelungsmechanismus oder mittels eines Kreiskeiltechnikverfahrens nach DE 199 45 097, möglich.

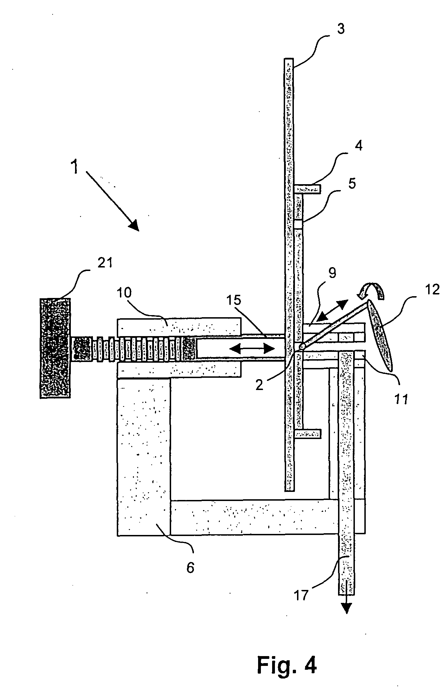

In Fig. 4 ist eine Klemmvorrichtung 1 in einer Ausführungsform mit einem veränderten Klemmmittel 10 ersichtlich. Die Druckbuchse 15 wird hier durch eine Spannschraube 21 in Klemmposition oder in eine gelöste Position gebracht. Die Klemmkraft kann mit einer derartigen Methode genau dosiert werden.

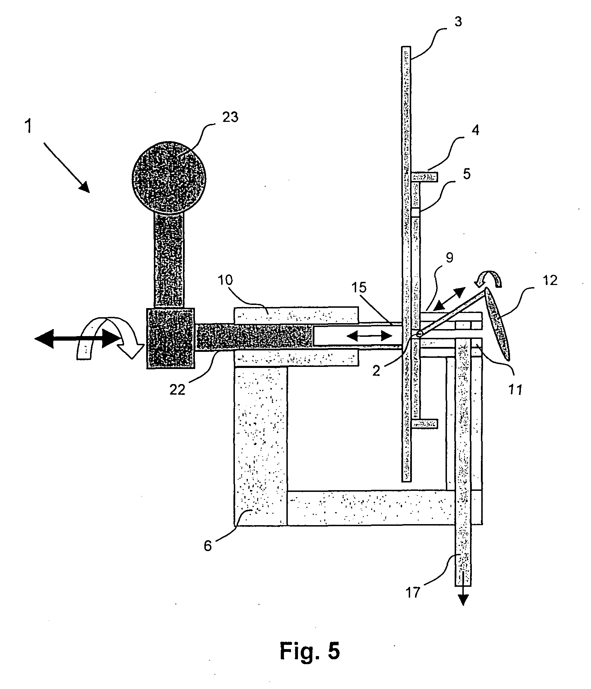

In Fig. 5 ist eine Klemmvorrichtung 1 in einer dritten Ausführungsform mit einem alternativen Klemmmittel 10 ersichtlich. Die Druckbuchse 15 bildet den Bestandteil einer Schubstange 22, die bei Betätigung eines Handhebels 23 in Richtung bzw. entgegengesetzt der Bearbeitungsstelle 2 bewegt werden kann. Mit einer Einhandbedienung kann die Schubstange 22 verschoben sowie in bestimmter Position fixiert werden.
Ein Schubstangen-Spanner-System RAKO der Firma DE-STA-CO kann als derartiges Spannmittel angewendet werden.

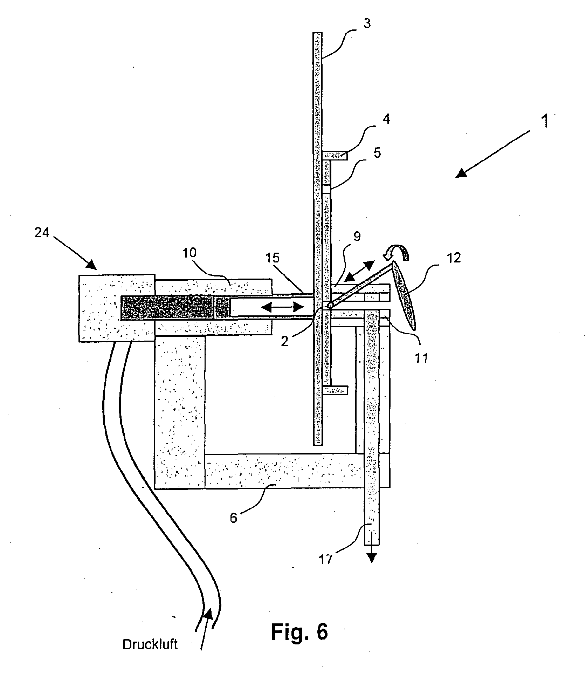

Fig. 6 zeigt eine vierte Ausführungsform einer Klemmvorrichtung 1. Hier ist als Klemmmittel 10 ein Pneumatikspanner 24 vorgesehen. Mittels Druckluft wird über einen Pneumatikzylinder die Druckbuchse 15 an das Bauteil 3 gedrückt. Über den Klemmbügel 6 wird die Klemmkraft auch auf das Klemmteil 9 geleitet und die Bohrbuchse 11 wird ebenfalls an das Bauteil 4 gedrückt. Die übrigen Bauteile der Klemmvorrichtung 1, insbesondere das Klemmmittel 9, ist entsprechend der in Fig. 2 gezeigten Ausführungsform ausgebildet.

Die Erfindung ist nicht auf die gezeigten Ausführungsbeispiele beschränkt. Die verschiedenen Ausführungen der Klemmmittel 9 und 10 können auch in nicht dargestellten Varianten kombiniert werden.

## Patentansprüche

1. Vorrichtung zum Klemmen von mindestens zwei Bauteilen, wobei ein Klemmbügel vorgesehen ist, der zwei Klemmteile an den Bauteilen im Bereich einer Bearbeitungsstelle positioniert, **dadurch gekennzeichnet, dass** ein Klemmteil (9) ein Führungselement (11; 20) für ein Bohrwerkzeug (16; 19) aufweist und in dieses Führungselement (11; 20) ein entfernbarer Positionierstift (12) zum Positionieren an einer Bearbeitungsstelle (2, 5) angeordnet ist sowie das weitere Klemmteil (10) Spannmittel (13, 14; 21; 22, 23; 24) zum Verstellen einer Druckbuchse (15) von einer geöffneten Positionierposition in eine Feststellposition aufweist.

2. Vorrichtung nach Anspruch 1, **dadurch gekennzeichnet, dass**
das Führungselement als eine Bohrbuchse (11) ausgebildet ist.

3. Vorrichtung nach einem der Ansprüche 1 oder 2, **dadurch gekennzeichnet,**
**dass** das Führungselement als ein Adapter (20) zum Adaptieren einer Bohrmaschine (19) ausgebildet ist.

4. Vorrichtung nach Anspruch 3, **dadurch gekennzeichnet, dass** der Adapter (20) einen Riegelmechanismus bekannter Art oder einen Spannmechanismus nach Kreiskeiltechnik aufweist.

5. Vorrichtung nach Anspruch 1, **dadurch gekennzeichnet, dass**
das Spannmittel als Spannhebel (13) mit einer exzentrischen Lagerung (14) ausgebildet ist.

6. Vorrichtung nach Anspruch 1, **dadurch gekennzeichnet, dass**
das Spannmittel als eine Spannschraube (21) ausgebildet ist.

7. Vorrichtung nach Anspruch 1, **dadurch gekennzeichnet, dass**
das Spannmittel als eine Schubstangenspannbuchse (22) mit einem Handhebel (23) ausgebildet ist.

8. Vorrichtung nach Anspruch 1, **dadurch gekennzeichnet, dass**
das Spannmittel als ein Pneumatikspanner (24) ausgebildet ist.

9. Vorrichtung nach einem der vorangegangenen Ansprüche, **dadurch gekennzeichnet, dass**
am Führungselement (11; 20) eine Spanabsaugung (17, 18) vorgesehen ist.
